Europäisches Patentamt

European Patent Office

Office européen des brevets

(19)

(11) **EP 1 052 630 A1**

(12) **EUROPEAN PATENT APPLICATION**

(43) Date of publication:
**15.11.2000 Bulletin 2000/46**

(51) Int. Cl.⁷: **G11B 7/24**

(21) Application number: **00302171.4**

(22) Date of filing: **16.03.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **10.05.1999 JP 12924499**

(71) Applicant:
**VICTOR COMPANY OF JAPAN, LTD.**
**Yokohama-Shi, Kanagawa-Ken (JP)**

(72) Inventors:
• **Nishizawa, Akira**
  **Yokohama-shi, Kanagawa-ken (JP)**
• **Kojima, Takeo**
  **Naka-gun, Kanagawa-ken (JP)**

(74) Representative:
**Neobard, William John et al**
**Page White & Farrer**
**54 Doughty Street**
**London WC1N 2LS (GB)**

(54) **Optical disc with transparent film**

(57)    An optical disc has a recording layer on which data has been stored and a transparent layer stuck on the recording layer. The transparent layer is composed of two transparent films. One of the film is stuck on the other film at a predetermined angle formed between reference points on the films with respect to the center of the optical disc so that the stuck films exhibit the minimum birefringence while the data is retrieved by a laser beam through the transparent layer.

**FIG.1**

**EP 1 052 630 A1**

Printed by Xerox (UK) Business Services
2.16.7 (HRS)/3.6

## Description

BACKGROUND OF THE INVENTION

The present invention relates to an optical disc from which data are retrieved through a transparent film formed on the disc.

Optical discs, such as, compact discs (CDs), have been widely used as storage media. High-density optical discs, such as, digital versatile discs (DVDs) are now on the market to meet a demand for large capacity.

Data stored on an optical disc is read by an optical head having a specific wavelength. Installed in the optical head is an objective lens that focuses a laser beam onto the optical disc. The laser beam incident from the rear side firstly passes through a disc substrate for protection of data from dirt or scratches on the disc surface when retrieved. The laser beam is focused onto the recording layer on which data has been stored, and is modulated by pits formed on the recording layer. The modulated beam is returned to the optical head for data retrieval.

Data retrieved from optical discs will be degraded if there is physical deformation of disc, such as, warpage or a variation in thickness of disc substrates. Data will also be degraded if there is an error in optical properties of the materials used for optical discs, such as, birefringence.

The degree of data degradation is related to the numerical aperture NA of an objective lens installed in each of optical heads if the wave length of a laser beam of each head is the same.

In detail, the larger the NA, the smaller the pits formed on the recording layer, for high density. On the other hand, the optical discs require small warpage at NA to the third power. Furthermore, optical disks require small variation in thickness of disc substrates to the standard thickness at NA to the fourth power.

The tolerances of optical discs to warpage (TW) and to variation in thickness (TV) are expressed as follows:

$$TW \; \alpha \; \lambda/(t \times (NA)^3), \; TV \; \alpha \; \lambda/(\Delta t \times (NA)^4)$$

where "$\lambda$" is a wavelength of a laser beam, "t" the thickness of a disc substrate through which the beam passes, and "$\Delta t$" a variation in thickness.

For DVDs, the thickness in disc substrate is made half the CDs, with increase in tolerance to warpage, for stable data retrieval.

The disc substrate can be made thinner for a laser beam passing therethough to attain higher storage density. One technique for this is disclosed in Japanese Unexamined Patent Publication No. 1996(8)-235638. It is disclosed that a transparent film of about 0. 1 mm in thickness is formed on a data recording layer by sticking the film thereon or applying an ultraviolet cure resin thereon. A laser beam passes through the transparent film for data retrieval.

An ultraviolet cure resin is however hardened to shrink for causing warpage of discs. Or, unstable irradiation of ultraviolet lays causes a variation in thickness of ultraviolet cure resin.

Experiments on production of optical discs with transparent films, such as, polycarbonate films by sticking thereof on the data recording layers resulted in improvement in thickness or less variation in thickness of discs. These transparent films however exhibited anisotropy in coefficient of linear expansion, Young's modulus or birefringence when the materials, such as, polycarbonate, had been drawn into films.

The anisotropy caused a large variation of data output over the disc surfaces.

Furthermore, the experiment on production of optical discs at 20°C and data retrieval at 50 °C resulted in large warpage of discs.

SUMMARY OF THE INVENTION

A purpose of the present invention is to provide a high-density optical disc having transparent films with less warpage and stable data output regardless of anisotropy in birefringence of the transparent films, and also a method of producing the optical disc.

The present invention provides an optical disc having a recording layer on which data has been stored and a transparent layer stuck on the recording layer. The transparent layer is composed of at least a first transparent film and a second transparent film. The first film is stuck on the second film at a predetermined angle formed between reference points on the films with respect to the center of the optical disc so that the stuck films exhibit the minimum birefringence while the data is retrieved by a laser beam through the transparent layer.

Furthermore, the present invention provides a method of producing an optical disc having a recording layer on which data is stored. At least a first transparent film and a second transparent film are stuck each other at a predetermined angle formed between reference points on the films with respect to the center of the optical disc, to form a transparent layer. The transparent layer is then stuck on the recording layer. The angle is adjusted so that the transparent layer exhibits the minimum birefringence while the data is retrieved by a laser beam through the transparent layer.

BRIEF DESCRIPTION OF DRAWINGS

FIG. 1 is a partially enlarged sectional view of an embodiment of an optical disc according to the present invention;
FIG. 2 illustrates measuring equipment of birefringence;
FIGS. 3A and 3B illustrate the distribution of birefringence exhibited by a polycarbonate resin film;

FIGS. 4A, 4B and 4C illustrate two polycarbonate resin films stuck each other; and

FIG. 5 is a graph showing variation in birefringence exhibited by the polycarbonate resin films stuck each other at angle α.

DETAILED DESCRIPTION OF PREFERRED EMBODIMENTS

Preferred embodiments according to the present invention will be disclosed with reference to the attached drawings.

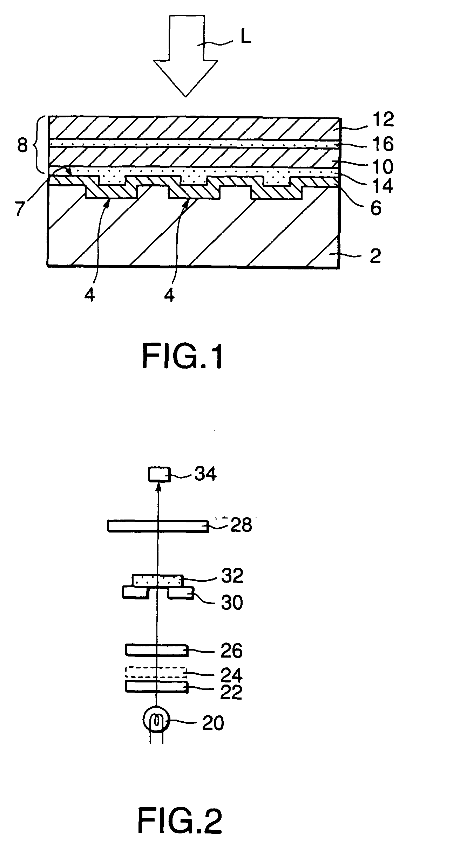

FIG. 1 illustrates an embodiment of an optical disc according to the present invention.

An optical disc D has a disc substrate 2 made of a polycarbonate resin, for example. Formed on the substrate 2 are concavities 4, such as, pits (for data retrieval) or grooves (for recording). The concavities 4 are covered with a film 6 that is a reflective film (for retrieval) or a recording film, to form a data recording layer 7. A transparent layer 8 is stuck on the film 6 by an adhesive (a transparent adhesive layer) 14. The layer 8 is composed of two transparent films 10 and 12 stuck each other by an adhesive (a transparent adhesive layer) 16.

Firstly, the disc substrate 2 is prepared through conventional processes.

The preparation starts with a process of applying a resist on a large glass disc which has been polished to be flat and washed. The glass disc is larger than the optical disc D to be produced. The resist is dissolved in a dilute solution and applied on the glass disc by a spin coater. The thickness of resist is the same as or larger than the depth of pits which will be formed later. This glass disc is called a resist disc.

The resist disc is set on a cutting apparatus after the dilute solution is volatilized. The cutting apparatus is provided with a laser diode to emit a laser beam for forming pits or grooves, a modulator to modulate the laser beam, a focusing lens to focus the laser beam to expose the resist disc for forming the pits, and a turntable to turn the resist disc.

Data are stored as pits on the resist disc if the disc is a retrieval type, while they are stored as grooves if a recording type.

The resist disc is set into a development process after it is exposed to a laser beam for forming pits or grooves. The resist disc is developed by an alkaline solution to precipitate the pits or grooves.

The resist disc formed with the pits or grooves is coated with a thin conductive film of nickel, for example, after being washed and dried.

The disc coated with the nickel film is dipped into a nickel plating solution for nickel electroforming. The thickness of the layer plated with nickel depends on a mold, such as, about 0. 3 mm.

The nickel-plated layer is peeled off from the resist disc, and is processed inside and outside after washed and polished, to be fit in the mold. This processed disc is called a stamper.

Like conventional LP or EP records, the nickel-plated layer is sometimes called a master. Replicas of the nickel-plated layer, such as, a mother or a stamper, can be produced from the master.

The stamper is set on an injection mold. Disc substrates having a center hall are produced with desired diameter and thickness.

Formed on each disc substrate in the injection molding are pits or grooves exactly the same shape as those that have been formed on the resist disc by the cutting apparatus.

When pits are formed, they are covered with the film 6 (FIG. 1) that is a high reflective thin metallic film of about 60 nm in thickness of Al or an alloy of Al and Ti or Cr (5 wt% or less), for example, by a sputtering apparatus. On the other hand, when grooves are formed, they are covered with a multi-layer film of, for example, a dielectric layer of $SiO_2$, a recording layer of Cr, Ta, Sb and Te, and an Al reflective film.

The disc surface is conventionally covered with a protective film for corrosion or scratches. The protective film is usually the monomer of an ultraviolet cure resin having a low viscosity. The monomer of the ultraviolet cure resin is applied on the reflective or recording film by a spinner, and hardened by ultraviolet rays. A label indicating the stored data is printed on the protective film by screen printing, for example.

However, in the present invention, formed on the disc surface is a transparent layer composed of a plurality of transparent films, instead of the monomer of an ultraviolet cure resin.

Illustrated in FIG. 1 is the transparent layer 8 stuck on the film 6 by the adhesive 14. The layer 8 is composed of the two transparent films 10 and 12 stuck each other by the adhesive 16. The films 10 and 12 are, preferably, a thin film of polycarbonate resin. The optical disc D is illuminated with a laser beam L for data retrieval from the transparent layer 8 side.

The thickness in the transparent films 10 and 12 is 0. 5 mm or less each (thinner than half a disc substrate) according to the present invention.

The transparent thin films 10 and 12 can be formed by conventional techniques using a T die, or by inflation or calender forming techniques. The films may be elongated for strength by single-axis or biaxial elongation.

The transparent thin film exhibits mechanical and optical anisotropy in the longitudinal and transversal directions of the film that will be taken up by a take-up reel. Any slant directions with respect to the take-up direction do not correspond to the longitudinal and transversal directions.

More in detail, such a transparent thin film exhibits mechanical and optical anisotropy, such as a coefficient of linear expansion, Young modulus, birefringence, an internal stress, the direction of internal stress and the distribution of film thickness.

Forming only one transparent thin film on the disc substrate 2 causes warpage due to mechanical anisotropy in coefficient of linear expansion or Young modulus, or unstable data retrieval due to optical anisotropy, such as birefringence.

The discussion focuses on birefringence to prove the inventiveness of the present invention.

Birefringence is caused by slight difference in refractive index in at least two directions among longitude, latitude and height of a film.

Measuring equipment of birefringence is illustrated in FIG. 2.

A light beam emitted by a lamp 20 is scattered through a ground glass 22. The scattered light passes through a rotatable polarizer 26 to be a beam of plane-polarized light. A wavelength selection filter 24 may be set between the ground glass 22 and the rotatable polarizer 26 for allowing light components having desired wavelength only passing therethrough.

The beam of plane-polarized light then passes through another rotatable polarizer 28, but is almost not allowed to pass therethrough whenever the polarizer 28 rotates to exhibit a 90 degree-difference in plane of polarization to the incident plane-polarized light beam.

A transparent film 32 is then set on a rotatable mount 30. The film 32 exhibits birefringence that increases the amount of light beam to pass through the rotatable polarizer 28.

The rotatable polarizer 28 is rotated so that the amount of light beam passing therethrough becomes the minimum. The minimum amount is measured by an analyzer 34 or visual inspection.

The birefringence is represented by the difference between the angle of the rotatable polarizer 28 through which the minimum amount of light beam passes before the film 32 is set and another angle of the polarizer 28 through which the minimum amount of light beam passes after the film 32 is set. The birefringence can be measured in length by dividing the wavelength of the light beam by the angle difference. The angle difference and length can be assigned "+" or "-" according to the rotational direction of the rotatable polarizer 28.

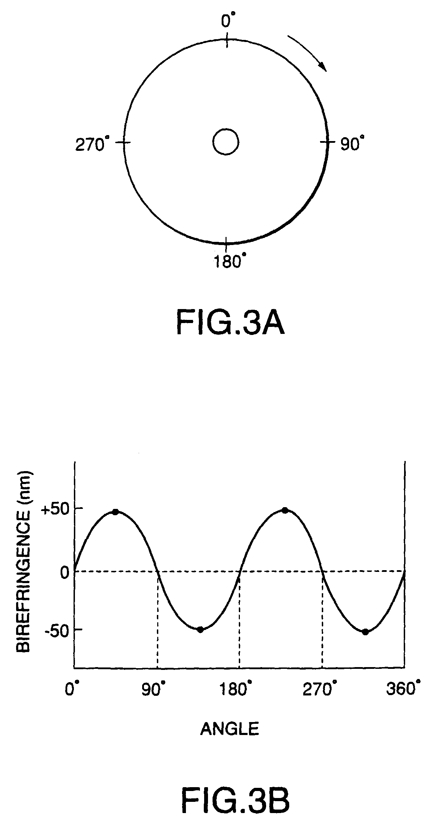

The degree of birefringence depends on the material used for the transparent film 32 and the forming method thereof. A polycarbonate resin film exhibits large birefringence as shown in FIGS. 3A and 3B.

Illustrated in FIGS. 3A is a round polycarbonate film having a diameter of 120 mm. The experimental result on birefringence v. s. angle of rotation of the round film is shown in FIG. 3B.

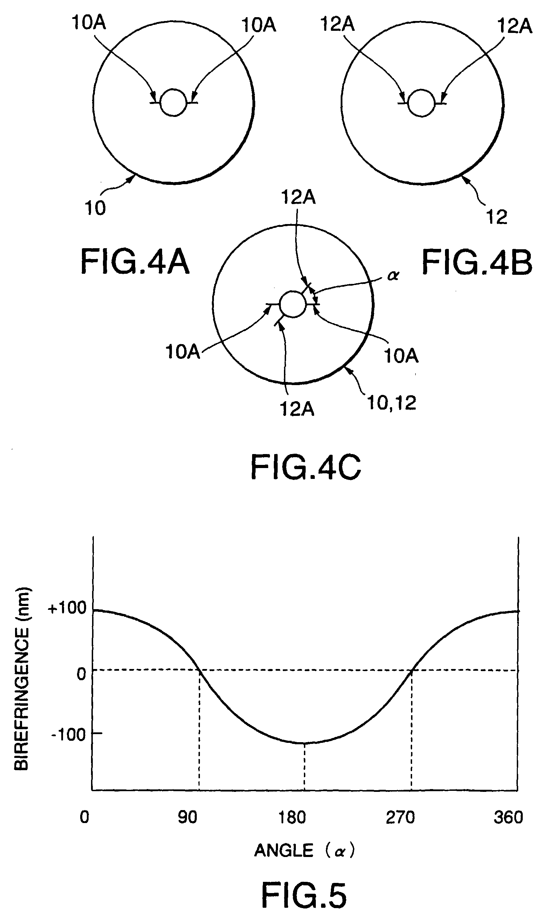

The results have led the inventors to overcome the problems on optical discs discussed so far by the method as disclosed below with reference to FIGS. 4A to 4C and FIG. 5.

The two polycarbonate resin films 10 and 12 are prepared, which will be used for the optical disc D, as shown in FIG. 1. Marks 10A (reference points) are made on the film 10, that indicate the direction in which birefringence becomes the maximum in positive, as shown in FIG. 4A. Marks 12A (reference points)are made on the film 12, that indicate the direction in which birefringence becomes the maximum in positive, as shown in FIG. 4B. The film 12 is then put on the film 10 at an angle α between the marks 10A and 12A, as shown in FIG. 4C.

The marks 10A and 12A can be made on the films so that they indicate the directions in which birefringence becomes the minimum in positive or negative.

The experimental results on birefringence v. s. angle α are shown in FIG 5. The birefringence was almost zero at the angle α, 90 and 270 degrees.

The experiment teaches that transparent thin films stuck each other at an appropriate angle α, such as, 90 and 270 degrees, over an optical disc cancel birefringence that would occur on the disc, or makes variation in birefringence almost zero over the disc during data retrieval. This results in decrease in variation of retrieved data levels.

Furthermore, optical discs can be protected from warpage by using two or more of thin optical films stuck each other at an appropriate angle α.

It is now understood that the transparent layer 8 (FIG. 1) composed of the transparent thin films 10 and 12 stuck on the film 6 by the adhesives 14 and 16 reveals high data retrieval performance for optical discs with less variation in output data levels.

The two transparent thin films 10 and 12 are used, however, three or more films can be used in this invention. The degree of mechanical and optical anisotropy for such films varies according to batches of films and the products offered by film manufacturers. It is therefore preferable to stick a plurality of films according to their mechanical and optical properties for better data retrieval performance.

The mechanical and optical anisotropy would also vary from the starting to end stages of film processing even for the same batch of films. Furthermore, films available for the present invention are generally wider than 120 mm that is the width of optical discs. This would result in difference in mechanical and optical anisotropy with respect to the widths of processed films. It is therefore preferable to check mechanical and optical properties of a plurality of films even in the same batch for obtaining appropriate angles α (FIG. 4C) for the transparent layer 8 shown in FIG. 1.

Not only the same type but also different types of films can be used as transparent thin films for the present invention, such as, a combination of a polycarbonate film and a polyvinyl chloride film, a vinylidene chloride film, a polyethylene terephthalate film or a polystyrene film.

As disclosed above, the transparent thin films stuck at an appropriate angle α determined based on mechanical and optical anisotropy on the data recording surface of an optical disc protect retrieved data from lowering its level which would occur due to birefringence exhibited by the films.

Moreover, the distribution of birefringence indicates the direction and strength of residual stress left after films are processed. Sticking two films, such as, polycarbonate films, each other at an angle $\alpha$ so that birefringence becomes the minimum, will also cancel internal stress of the films. These films thus protect an optical disc from warpage or surface variation.

Discussed below is the comparison between the samples of optical disc according to the present invention and of conventional optical disc.

[Sample A]

An optical disc (sample A) was produced according to the present invention.

A polycarbonate resin disc substrate was prepared by injection molding using an optical disc mold installing a stamper that was a plate on which data to be stored on an optical disc had been stored.

The disc substrate was prepared with 12 cm in diameter and 1. 2 mm in thickness. The data recording surface was then coated with a 60 nm-thick aluminum reflective film by spattering.

Next, a 100 $\mu$m-thick polycarbonate film was cut into two doughnut-like transparent films with a 119 mm-diameter to the outer periphery and a 30 mm-diameter to the inner periphery.

Birefringence was measured from the inner to outer peripheries for each polycarbonate film. A black mark was made on the (reference) point on each film that exhibited the maximum birefringence. The two films were stuck each other at 90 degrees formed between the marked points with respect to the center of the films to confirm a decrescence of birefringence.

Birefringence was measured again from the inner to outer peripheries of the stuck films. The result was that birefringence was decreased all over the surface compared to each film. A red mark was made on the same inner peripheral points of the films. The films were then separated from each other.

The disc substrate coated with the reflective film was mounted on a spinner turntable. An ultraviolet cure resin (adhesive) is applied on the reflective film while the turntable was rotating slowly. Then, the ultraviolet cure resin was applied with 1 cm in width and 6 mm in thickness on the middle section between the outer and inner peripheries of the reflective film.

One (the first) of the doughnut-like polycarbonate films was placed on the reflective film, and the spinner was rotated at a high speed so that the ultraviolet cure resin was spread all over the reflective film under the polycarbonate film.

The disc substrate was taken away from the spinner and illuminated with ultraviolet-rays for hardening the ultraviolet cure resin.

The resin-hardened disc substrate was again mounted on the turntable, and an ultraviolet cure resin was applied on the first polycarbonate film.

The other (second) polycarbonate film was placed on the first polycarbonate film so that the red-marked points met each other.

The spinner was rotated at a high speed so that the ultraviolet cure resin was spread between the two polycarbonate films.

The disc substrate was taken away from the spinner and illuminated with ultraviolet-rays for hardening the ultraviolet cure resin, to produce the sample A.

The thickness of each layer of the sample A was as follows:

the first ultraviolet cure resin layer between the aluminum reflective film and the first polycarbonate film = 5 $\mu$m;
the second ultraviolet cure resin layer between the first and the second polycarbonate films = 7 $\mu$m; and
the transparent layer $\fallingdotseq$ 0. 21 mm.

The produced optical disc (sample A) warped little and also the surface was little deflected. Furthermore, the maximum signal level for one rotation of the optical disc during reproduction by a laser beam at a wavelength of 410 nm was about 103 % of the minimum signal level. Thus, the output level change was little.

[Sample B]

Another optical disc (sample B) was produced according to the present invention.

A 100 $\mu$m-thick polycarbonate film formed by the calendar method was cut into two doughnut-like transparent films with a 119 mm-diameter to the outer periphery and a 30 mm-diameter to the inner periphery.

Birefringence was measured from the inner to outer peripheries for each film. A black mark was made on the (reference) point on each film that exhibited the maximum birefringence. The two films were stuck each other at 90 degrees formed between the marked points with respect to the center of the films to confirm a decrescence of birefringence.

Birefringence was measured again from the inner to outer peripheries for the stuck films. The result was that birefringence was decreased all over the surface compared to each film. A red mark was made on the same inner peripheral points of the films. The films were then separated from each other.

One (the first) of the doughnut-like polycarbonate films was mounted on a spinner turntable. An ultraviolet cure resin (adhesive) is applied on the reflective film while the turntable was rotating slowly.

The other (second) polycarbonate film was placed on the first polycarbonate film so that the red-marked points met each other.

The spinner was rotated at a high speed so that the ultraviolet cure resin was spread between the two polycarbonate films.

The stuck films were taken away from the spinner and illuminated with ultraviolet-rays for hardening the ultraviolet cure resin.

A disc substrate coated with a reflective film was mounted on the spinner turntable. An ultraviolet cure resin (adhesive) is applied on the reflective film while the turntable was rotating slowly. Then, the ultraviolet cure resin was applied with about 1 cm in width and 6 mm in thickness on the middle section between the outer and inner peripheries of the reflective film.

The stuck polycarbonate films were placed on the reflective film, and the spinner was rotated a high speed so that the ultraviolet cure resin was spread all over the reflective film under the stuck films.

The disc substrate was taken away from the spinner and illuminated with ultraviolet-rays for hardening the ultraviolet cure resin, to produce the sample B.

The thickness of the transparent layer was about 0. 22 mm. The produced optical disc (sample B) warped little and also the surface was little deflected. Furthermore, the maximum signal level for one rotation of the optical disc during reproduction by a laser beam at a wavelength of 410 nm was about 105 % of the minimum signal level. Thus, the output level change was little.

[Sample C]

An optical disc (sample C) was produced according to the conventional method.

A polycarbonate resin disc substrate was prepared by injection molding using an optical disc mold installing a stamper that was a plate on which data to be stored on an optical disc had been stored.

The disc substrate was prepared with 12 cm in diameter and 1. 2 mm in thickness. The data recording surface was coated with a 60 nm-thick aluminum reflective film by spattering.

A 200 $\mu$m-thick polycarbonate film formed by the calendar method was cut into two doughnut-like transparent films with a 119 mm-diameter to the outer periphery and a 30 mm-diameter to the inner periphery.

Note that the thickness (200 $\mu$m) of the polycarbonate film (sample C) formed by the calendar method was two times the thickness (100 $\mu$m) of the polycarbonate film for the samples A and B according to the present invention.

The disc substrate coated with the reflective film was mounted on a spinner turntable. An ultraviolet cure resin (adhesive) was applied on the reflective film while the turntable was rotating slowly. Then, the ultraviolet cure resin was applied with 1 cm in width and 6 mm in thickness on the middle section between the outer and inner peripheries on the reflective film.

The doughnut-like polycarbonate film was placed on the reflective film, and the spinner was rotated at a high speed so that the ultraviolet cure resin was spread all over the reflective film under the polycarbonate film.

The disc substrate was taken away from the spinner and illuminated with ultraviolet-rays for hardening the ultraviolet cure resin, to produce the sample C.

The thickness of the transparent layer was about 0. 22 mm. The produced optical disc (sample C) warped and also the surface was much deflected. This is because the transparent film exhibited mechanical and optical anisotropy in the longitudinal and transversal directions as already discussed. Furthermore, the maximum signal level for one rotation of the optical disc during reproduction by a laser beam at a wavelength of 410 nm was about three times the minimum signal level. The reproduced signal was degraded.

As disclosed above, the samples A and B according to the present invention warped less and also their surfaces were deflected less than the sample C produced by the conventional method.

An ultraviolet cure resin is suitable as an adhesive for sticking transparent films according to the present invention. However, not only this, but also a double-faced adhesive tape, and a reactive adhesive, such as, a two-liquid cure epoxy resin are preferable.

The thickness of each transparent film was 100 $\mu$m for the samples A and B. However, the thickness may be 10 $\mu$m, 20 $\mu$m, 30$\mu$m, 50 $\mu$m or 75$\mu$m for each film. Moreover, a plurality of films of different thickness can be used for composing a transparent layer.

As disclosed above, according to the present invention, a plurality of transparent films are stuck each other at a specific angle under consideration of birefringence to form a transparent layer, thus resulting in exhibiting less birefringence and internal stress.

Optical discs using this transparent layer can therefore be protected from warpage and surface reflection for stable signal reproduction, thus being suitable for high-density recording.

**Claims**

1. An optical disc comprising:

   a recording layer on which data has been stored; and
   a transparent layer stuck on the recording layer, the transparent layer being composed of at least a first transparent film and a second transparent film, the first film being stuck on the second film at a predetermined angle formed between reference points on the films with respect to the center of the optical disc so that the stuck films exhibit the minimum birefringence while the data is retrieved by a laser beam through the transparent layer.

**2.** The optical disc according to claim 1, wherein each film exhibits the maximum or minimum birefringence at the reference point before sticking.

**3.** The optical disc according to claim 1, wherein the angle is 90 or 270 degrees.

**4.** The optical disc according to claim 1, wherein at least either the first or the second film is a polycarbonate film, a polyvinyl chloride film, a vinylidene chloride film, a polyethylene terephthalate film or a polystyrene film.

**5.** The optical disc according to claim 1, wherein the thickness of at least either the first or the second transparent film is 10 μm, 20 μm, 30μm, 50 μm or 75μm.

**6.** The optical disc according to claim 1, wherein the first transparent film is stuck on the second transparent film via a transparent adhesive layer.

**7.** The optical disc according to claim 1, wherein the transparent layer is stuck on the recording layer via a transparent adhesive layer.

**8.** The optical disc according to claim 6 or 7, wherein the transparent adhesive layer is an ultraviolet cure resin layer, a double-faced adhesive tape layer, or a two-liquid cure epoxy resin layer.

**9.** A method of producing an optical disc having a recording layer on which data is stored, comprising the steps of:

sticking at least a first transparent film and a second transparent film each other at a predetermined angle formed between reference points on the films with respect to the center of the optical disc, to form a transparent layer; and sticking the transparent layer on the recording layer, the angle being adjusted so that the transparent layer exhibits the minimum birefringence while the data is retrieved by a laser beam through the transparent layer.

**10.** The method of producing an optical disc according to claim 9, further comprising the step of deciding the reference points so that each film exhibits the maximum or minimum birefringence before sticking.

**11.** The method of producing an optical disc according to claim 9, wherein the transparent film sticking step comprising the step of sticking the first transparent film on the second transparent film by means of a transparent adhesive.

**12.** The method of producing an optical disc according to claim 9, wherein the transparent layer sticking step comprising the step of sticking the transparent layer on the recording layer by means of a transparent adhesive.

# FIG.1

# FIG.2

FIG.3A

FIG.3B

FIG.4A

FIG.4B

FIG.4C

FIG.5

European Patent Office

## EUROPEAN SEARCH REPORT

Application Number

EP 00 30 2171

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 256 554 A (TEIJIN CHEMICALS LTD) 24 February 1988 (1988-02-24) * the whole document * | 1-4,6, 8-11 | G11B7/24 |
| X | US 4 389 719 A (HEINEMANS HENDRICUS C A M ET AL) 21 June 1983 (1983-06-21) * abstract * * column 3, line 19 - line 45 * | 1-5 | |
| X | PATENT ABSTRACTS OF JAPAN vol. 010, no. 149 (P-461), 30 May 1986 (1986-05-30) & JP 61 003338 A (TORAY KK), 9 January 1986 (1986-01-09) * abstract * | 1,4,9 | |
| A | US 4 415 942 A (FROSCH ALBERT ET AL) 15 November 1983 (1983-11-15) * column 2, line 15 - column 3, line 11 * | 1,5 | |
| | | | TECHNICAL FIELDS SEARCHED (Int.Cl.7) |
| | | | G11B |

The present search report has been drawn up for all claims

| Place of search | Date of completion of the search | Examiner |
|---|---|---|
| BERLIN | 1 August 2000 | Quaranta, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 30 2171

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2000

| Patent document cited in search report | | Publication date | Patent family member(s) | | Publication date |
|---|---|---|---|---|---|
| EP 0256554 | A | 24-02-1988 | JP 63047139 A | | 27-02-1988 |
| US 4389719 | A | 21-06-1983 | NL 8002039 A | | 02-11-1981 |
| | | | AT 369917 B | | 10-02-1983 |
| | | | AT 159481 A | | 15-06-1982 |
| | | | AU 6909781 A | | 15-10-1981 |
| | | | CA 1157948 A | | 29-11-1983 |
| | | | EP 0037607 A | | 14-10-1981 |
| | | | ES 501101 D | | 01-06-1982 |
| | | | ES 8205475 A | | 01-10-1982 |
| | | | JP 57066545 A | | 22-04-1982 |
| JP 61003338 | A | 09-01-1986 | NONE | | |
| US 4415942 | A | 15-11-1983 | EP 0047330 A | | 17-03-1982 |
| | | | AT 7971 T | | 15-06-1984 |
| | | | CA 1172154 A | | 07-08-1984 |
| | | | DE 3068214 D | | 19-07-1984 |
| | | | JP 1379492 C | | 28-05-1987 |
| | | | JP 57050326 A | | 24-03-1982 |
| | | | JP 61046891 B | | 16-10-1986 |

EPO FORM P0459